# EUROPEAN PATENT SPECIFICATION

(11) **EP 4 689 603 B1**
(45) Date of publication and mention of the grant of the patent: **16.09.2026**
(21) Application number: 25709221.3
(22) Date of filing: 31.01.2025
(51) Int. Cl.: G01N 15/14

(54) **FLUORESCENCE SENSITIVITY MONITOR FOR A FLOW CYTOMETER**
FLUORESZENZEMPFINDLICHKEITSMONITOR FÜR EIN DURCHFLUSSZYTOMETER
MONITEUR DE SENSIBILITÉ À LA FLUORESCENCE POUR UN CYTOMÈTRE EN FLUX

(30) Priority: 01.02.2024 US 202463548653 P
(43) Date of publication of application: 11.02.2026
(73) Proprietor: Beckman Coulter, Inc., Brea, CA 92821-6232 (US)
(72) Inventor: KIM, Evgenia M., Brea, California 92821 (US); GENTILE, Maria C., Brea, California 92821 (US)
(74) Representative: Maiwald GmbH
(86) International application number: PCT/US2025/014080
(87) International publication number: WO 2025/166197

(56) References cited:
- STEEN HARALD B.: "Noise, Sensitivity, and Resolution of Flow Cytometers", CYTOMETRY, vol. 13, no. 8, 1 January 1992 (1992-01-01), US, pages 822 - 830, XP093271390, ISSN: 0196-4763, DOI: 10.1002/cyto.990130804
- WELSH JOSHUA A. ET AL: "A compendium of single extracellular vesicle flow cytometry", JOURNAL OF EXTRACELLULAR VESICLES, vol. 12, no. 2, 1 February 2023 (2023-02-01), UK, XP093269586, ISSN: 2001-3078, Retrieved from the Internet <URL:https://onlinelibrary.wiley.com/doi/full-xml/10.1002/jev2.12299> DOI: 10.1002/jev2.12299
- SAMUEL A. STONER ET AL: "High sensitivity flow cytometry of membrane vesicles : Vesicle Flow Cytometry", CYTOMETRY A, vol. 89, no. 2, 20 October 2015 (2015-10-20), Hoboken, USA, pages 196 - 206, XP055603278, ISSN: 1552-4922, DOI: 10.1002/cyto.a.22787

## Description

### BACKGROUND

Fluorescence sensitivity monitoring is used to ensure the accuracy and reliability of the fluorescence detectors. The primary purpose of monitoring fluorescence sensitivity is to guarantee the precise measurement of fluorescent signals emitted by cells or particles labeled with fluorochromes. This process involves regular quality control checks to maintain the instrument's performance and detect any deviations in sensitivity. By optimizing settings, such as the light detector voltages, for each fluorochrome, laboratories can enhance sensitivity without saturating signals, contributing to consistent and reliable experimental outcomes.

Welsh, J. A., et al., "A compendium of single extracellular vesicle flow cytometry," Journal of Extracellular Vesicles, Vol. 89, No. 2 (2023). This document establishes a standardized framework for the multiparametric characterization of individual extracellular vesicles (EVs) via flow cytometry, addressing challenges in detection. It highlights essential procedures for instrument calibration, specifically light scatter and fluorescence, to ensure reproducible EV size and cargo measurements.

### SUMMARY

Examples presented herein relate to a method of fluorescence sensitivity monitoring in a flow cytometer. The method includes measuring fluorescence of a sheath fluid to determine a sheath noise, setting a threshold detection value using the sheath noise, and measuring fluorescence of a plurality of samples having predetermined fluorescence intensities at different wavelengths, using the threshold detection value. The method further includes gating for each sample of the plurality of samples having predetermined fluorescence intensities at different wavelengths, identifying, using the gating, for each sample of the plurality of samples having predetermined fluorescence intensities at different wavelengths, a mean fluorescence intensity (MFI), and calibrating one or more fluorescence channels of the flow cytometer by calculating, for each sample of the plurality of samples having predetermined fluorescence intensities at different wavelengths, molecules of equivalent soluble fluorochrome (MESF) using the MFI and the sheath noise.

In other examples presented herein, the method further includes filtering the sheath fluid. In further examples presented herein, the sheath fluid is a 5 nm sheath fluid.

In other examples presented herein, the sheath noise is the MFI of the sheath fluid. In still other examples presented herein, the plurality of samples having predetermined fluorescence intensities at different wavelengths comprise a plurality of hard dyed beads. In yet other examples presented herein, calculating MESF uses a calibration equation determined by measuring fluorescence of a plurality of color reader beads with each color reader bead being associated with a known amount of a fluorophore, defining MFI for each plurality of color reader beads per each fluorescence channel, and defining the calibration equation for each fluorescence channel using a relationship between the MFI and the known amount of the fluorophore.

In other examples presented herein, identifying, for each sample of the plurality of samples having predetermined fluorescence intensities at different wavelengths, the MFI, includes determining, for each sample of the plurality of samples having predetermined fluorescence intensities at different wavelengths, a peak intensity associated with the sample. In further examples presented herein, the method further includes determining a median and a standard deviation for each peak.

Other examples presented herein relate to a method of determining a lower limit of detection on a flow cytometer. The method includes measuring fluorescence on a sheath fluid to determine a sheath noise, setting a threshold detection value using the sheath noise, and measuring fluorescence of a plurality of fluorescent samples using the threshold value. In other examples presented herein, the method further includes filtering the sheath fluid. In further examples presented herein, the sheath fluid is a 5 nm sheath fluid. In other examples presented herein, the sheath noise is the MFI of the sheath fluid.

Still other examples presented herein relate to a method of calibrating one or more fluorescence channels of a flow cytometer. The method including measuring fluorescence of a plurality of samples having predetermined fluorescence intensities at different wavelengths, using a predetermined detection threshold value, gating for each sample of the plurality of samples having predetermined fluorescence intensities at different wavelengths, identifying, for each sample of the plurality of samples having predetermined fluorescence intensities at different wavelengths, a mean fluorescence intensity (MFI), and calibrating one or more fluorescence channels of the flow cytometer by calculating, for each sample of the plurality of samples having predetermined fluorescence intensities at different wavelengths, molecules of equivalent soluble fluorochrome (MESF) using the MFI and the predetermined detection threshold.

In other examples presented herein, the predetermined detection threshold value is determined by measuring fluorescence on a sheath fluid to determine a sheath noise, and setting the predetermined detection threshold value using the sheath noise. In still other examples presented herein, the plurality of samples of predetermined fluorescent intensity or condition comprise a plurality of hard dyed beads. In further examples presented herein, the plurality of hard dyed beads comprise 8-peak beads.

In other examples presented herein, calculating MESF uses a calibration equation determined by measuring fluorescence of a plurality of color reader beads with each color reader bead being associated with a known amount of a fluorophore, defining MFI for each plurality of color reader beads per each fluorescence channel, and defining the calibration equation for each fluorescence channel using a relationship between the MFI and the known amount of the fluorophore. In still other examples presented herein, identifying, for each sample of the plurality of samples of predetermined fluorescent intensity or condition, the MFI, includes determining, for each sample of the plurality of samples of predetermined fluorescent intensity or condition, a peak intensity associated with the sample. In further examples presented herein, the method further includes determining a median and a standard deviation for each peak.

Yet other examples presented herein relate to a system for fluorescence sensitivity monitoring in a flow cytometer. The system includes a laser configured to emit light toward an interrogation location to produce fluorescent light signals from particles directed through the interrogation location in a fluid stream, a fluorescence detector configured to detect the fluorescent light signals from particles directed through the interrogation location, and a controller in communication with the fluorescence detector and including at least one processor and a non-transitory memory storing instructions. The instructions, when executed by the controller, cause the controller to measure, with the fluorescence detector, fluorescence of a sheath fluid to determine a sheath noise, set a threshold detection value using the sheath noise, measure, with the fluorescence detector, fluorescence of a plurality of samples having predetermined fluorescence intensities at different wavelengths, using the threshold detection value, gate for each sample of the plurality of samples having predetermined fluorescence intensities at different wavelengths, identify, for each sample of the plurality of samples having predetermined fluorescence intensities at different wavelengths, a mean fluorescence intensity (MFI), and calibrate one or more fluorescence channels of the flow cytometer by calculating, for each sample of the plurality of samples of predetermined fluorescent intensity or condition, molecules of equivalent soluble fluorochrome (MESF) using the MFI and the sheath noise.

Still other examples presented herein relate to a non-transitory computer readable medium including program instructions, which when executed by a processor, cause the processor to measure fluorescence of a sheath fluid to determine a sheath noise, set a threshold detection value using the sheath noise, measure fluorescence of a plurality of samples having predetermined fluorescence intensities at different wavelengths, using the threshold detection value, gate for each sample of the plurality of samples having predetermined fluorescence intensities at different wavelengths, identify, using the gating, for each sample of the plurality of samples having predetermined fluorescence intensities at different wavelengths, a mean fluorescence intensity (MFI), and calibrate one or more fluorescence channels of the flow cytometer by calculating, for each sample of the plurality of samples having predetermined fluorescence intensities at different wavelengths, molecules of equivalent soluble fluorochrome (MESF) using the MFI and the sheath noise.

In other examples presented herein, the non-transitory computer readable medium includes additional program instructions, which when executed by a processor, further cause the processor to filter the sheath fluid. In yet other examples presented herein, the non-transitory computer readable medium includes additional program instructions, which when executed by a processor, further cause the processor to calculate MESF uses a calibration equation determined by measuring fluorescence of a plurality of color reader beads with each color reader bead being associated with a known amount of a fluorophore, defining MFI for each plurality of color reader beads per each fluorescence channel, and defining the calibration equation for each fluorescence channel using a relationship between the MFI and the known amount of the fluorophore. In yet other examples presented herein, the non-transitory computer readable medium includes additional program instructions, which when executed by a processor, further cause the processor to determine a median and a standard deviation for each peak.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a schematic block diagram illustrating an example of a flow cytometer system.
FIG. 2 is an example of peaks resolved on side scatter and fluorescent channels using 8-peak beads for fluorescence sensitivity monitoring.
FIG. 3 depicts a comparison of the noise measurement of 8-peak bead buffers and sheath fluid on the violet side scatter channel.
FIG. 4 depicts a comparison of the resolution of 8-peak beads as triggered on each of a side scatter channel and a fluorescence channel.
FIG. 5 is a flowchart of an example method of fluorescence sensitivity monitoring in a flow cytometer.
FIG. 6 is a flowchart of an example method for determining a lower limit of detection on a flow cytometer.
FIG. 7 is a flowchart of an example method for calibrating one or more fluorescence channels of a flow cytometer.
FIG. 8 illustrates an exemplary architecture of a computing device that can be used to implement aspects of the flow cytometry system of FIG. 1.

### DETAILED DESCRIPTION

Fluorescence sensitivity monitoring in a flow cytometer is a procedure used to define a lower limit of fluorescence detection. A significant limitation in conventional fluorescence sensitivity monitoring is a lack of fluorophore relevant calibrators that go down to a level of several fluorescence molecules. Another important aspect is the procedure itself and how the calibrators are run in a flow cytometer. None of the current methods or systems for fluorescence sensitivity monitoring offer a quantitative way of assessing a lower limit of fluorescence detection as a part of regular quality control, which makes it harder for the users of the flow cytometer to assess the readiness of the instrument to perform the tests.

While fluorescence sensitivity monitoring is incorporated into some conventional flow cytometers, the existing procedure have several disadvantages. First, these procedures are generally done only in response to a user request, and therefore fail to cover daily monitoring of the instrument. Second, the smallest molecules of equivalent of soluble fluorochrome (MESF) is defined based on 1 µm blank beads, which is not resolvable from background noise detected and fails to establish an accurate lower limit of detection.

Reference will now be made in detail to exemplary aspects of the present disclosure that are illustrated in the accompanying drawings. Wherever possible, the same reference numbers will be used throughout the drawings to refer to the same or like parts.

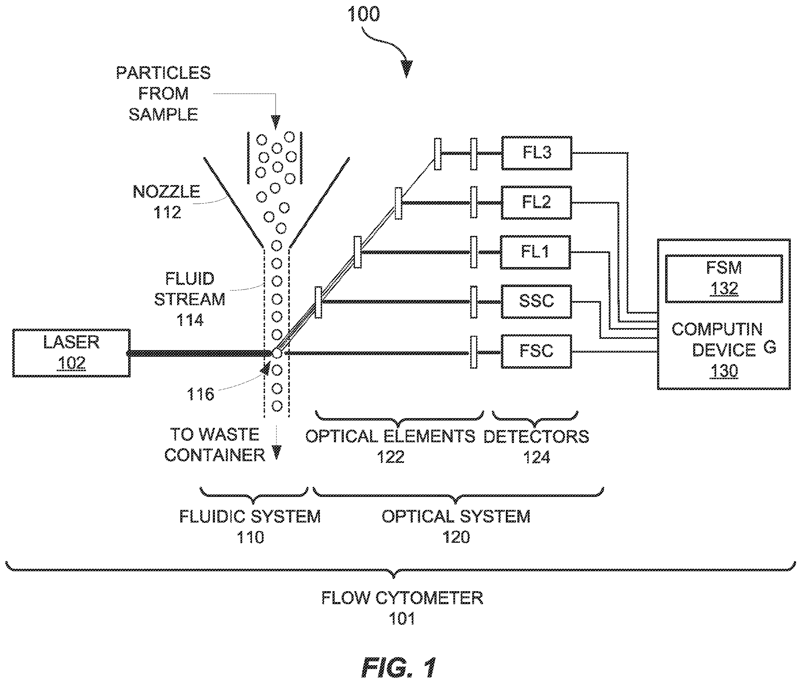

FIG. 1 is a schematic block diagram illustrating an example of a flow cytometer system 100. In general, flow cytometry is a technique for measuring and analyzing the physical and chemical properties of a sample of particles or cells. Data from millions of cells can be collected in a matter of minutes and displayed in a variety of formats for researchers or clinicians. Some example applications include phenotyping to identify and count specific cell types within a population, analyzing DNA or RNA content, determining the presence of antigens on the surface or within cells, and assessing cell health status.

Flow cytometry can be used to analyze and sort cells based on their physical and chemical properties. It is commonly employed in various fields, including immunology, oncology, hematology, and microbiology. Flow cytometers measure characteristics of individual cells as they pass through a fluidic system. As will be discussed in further detail below, several features of the flow cytometer contribute to differentiating between different cell and particle types, including all forward scatter (FSC), side scatter (SSC), and fluorescent detectors, multi-parameter analysis, and functional and quantitative assays.

The flow cytometer system 100 generally includes three main component subsystems: a fluidic system 110, an optical system 120, and a computing device 130. The fluidic system 110 includes a nozzle 112 which receives a sample containing particles or cells suspended in a fluid. The nozzle 112 creates and ejects a fluid stream 114 of particles arranged in a single file line. Each particle passes through one or more beams of light produced by a laser 102. The point at which a particle intersects with a light beam is known as an interrogation location 116.

The optical system 120 includes the laser 102, optical elements 122, and detectors 124. At the interrogation location 116, light from the laser 102 hits a particle and scatters. The optical elements 122 direct the scattered light toward the detectors 124. The detectors 124 may include a forward scatter (FSC) detector to measure scatter along the path of the laser 102, a side scatter (SSC) detector to measure scatter at a ninety-degree angle relative to the laser 102, and/or one or more fluorescence (FL1, FL2, and FL3) detectors to measure the emitted fluorescence intensity of different wavelengths of light.

Generally, FSC provides information about cell size, while SSC gives insights into cell granularity or internal complexity. By analyzing FSC and SSC, different cell types can be distinguished based on their size and internal structure. Generally, FSC intensity is proportional to the size or diameter of the particle due to light diffraction around the particle. FSC may therefore be used for the discrimination of particles by size. SSC, on the other hand, is produced from light refracted or reflected by internal structures of the particle and may therefore provide information about the internal complexity or granularity of the particle.

Different fluorochromes can be used to label different cell types or cellular markers. For example, antibodies conjugated with fluorochromes can specifically bind to cell surface markers, allowing for the identification of particular cell populations. By adding fluorescent labelling to a sample, different fluorescent signals/channels (e.g., green, orange, and red) can be analyzed for functional characteristics of a cell. For example, since T-cells present CD3 binding sites, a sample containing T-cells may be "stained" with anti-CD3 antibodies conjugated with a fluorescent molecule. As these cells pass through the interrogation location 116, the laser light excites the fluorescent tag, or fluorochrome, to emit photons at a wavelength detectable by a fluorescence detector. The detectors 124 may therefore simultaneously measure a number of parameters and enable categorization of particles by their function based on detected wavelengths of light.

The number of detectors 124, and in particular the number of fluorescence detectors (FL1, etc.), may be determined based on the particular parameters of a given experiment. For example, polychromatic flow cytometry, which is used to analyze and sort multiple characteristics of individual cells simultaneously, involves the use of multiple fluorescent markers. Each marker has a distinct emission spectrum and labels specific molecules or cellular components within a cell. By measuring the emitted light at different wavelengths, researchers can gather a wealth of information about a cell's properties, such as surface markers, intracellular proteins, and DNA content. This technique is particularly valuable for studying complex cell populations, including immune cells, and is commonly used in immunology, hematology, and cancer research to characterize and sort cells based on their unique molecular profiles.

Fluorescence sensitivity monitoring is used to ensure the accuracy and reliability of the fluorescence detectors. Consistency across experiments is a key benefit of fluorescence sensitivity monitoring, as it enables comparability of results over different experimental sessions. Detecting and addressing issues early on is another crucial aspect, as changes in sensitivity may indicate problems like optical misalignment, component degradation, or electronic issues within the flow cytometer. Moreover, fluorescence sensitivity monitoring is part of the validation process, allowing laboratories to verify that the instrument operates within established parameters and complies with standards and regulations. This proactive approach to quality control not only prevents data variability but also instills confidence in users regarding the reliability of the flow cytometer and its results. Overall, fluorescence sensitivity monitoring is integral to maintaining the accuracy, consistency, and compliance of flow cytometry data, contributing to the robustness of scientific and clinical analyses.

The flow cytometer system 100 of FIG. 1 includes elements which are shown and described for purposes of discussion, and it will be appreciated that numerous variations in components and functions are possible. The optical elements 122 may include a series of filters, dichroic mirrors, and/or beam splitters to select out different wavelengths of light and provide the wavelength to the appropriate detector 124. The detectors 124 may comprise, for example, light detectors, such as photomultiplier tubes (PMTs) or avalanche photodiodes (APDs).

The computing device 130 receives and processes signals received from the detectors 124 and may include, in some examples, a waveform acquisition device and a waveform analysis device. In some embodiments, computing device 130 comprises a computing device communicatively coupled with a flow cytometer 101 over a network. In other embodiments, the computing device 130 is integrated with the flow cytometer 101.

Computing device 130 performs data processing of the output of detectors 124 and transforms raw signals into meaningful information about the analyzed particles. In embodiments, analog signals from detectors 124 are then digitized, converting them into a digital format suitable for computer processing. Specialized data analysis software is employed to extract parameters, set gates to isolate specific populations of interest, and generate histograms that represent the distribution of data points. Researchers utilize the software to calculate statistics for each gated population, offering quantitative insights into the characteristics of different cell populations.

Data visualization tools aid in creating scatter plots and other graphical representations, facilitating the interpretation of complex datasets. Throughout the workflow, quality control checks are implemented to ensure the reliability and accuracy of the results. Researchers may validate their findings by comparing them with known standards or conducting internal controls. The processed data, along with visualizations and statistics, can be exported for further analysis or inclusion in scientific publications. Overall, the data processing of detector output in a flow cytometer is a comprehensive and systematic approach that allows researchers to unravel the complexities of cellular characteristics at the single-cell level.

In embodiments, computing device 130 is used to store instructions for and/or execute automatic or manual fluorescence sensitivity monitoring of flow cytometer 101, such as in fluorescence sensitivity monitoring module 132. Fluorescence sensitivity monitoring is conventionally conducted by measuring a predetermined number of peaks of fluorescence intensity based on triggering on a side scatter detector. Eight hard-dyed beads are commonly used to generate the predetermined number of peaks, referred to conventionally and herein as "8-peak beads," but those of skill in the art will understand that other numbers of peaks may be used for the fluorescence sensitivity monitoring. Bead and noise populations are gated and, based on this data, the number of peaks are defined that are resolved from the noise in each fluorescent channel.

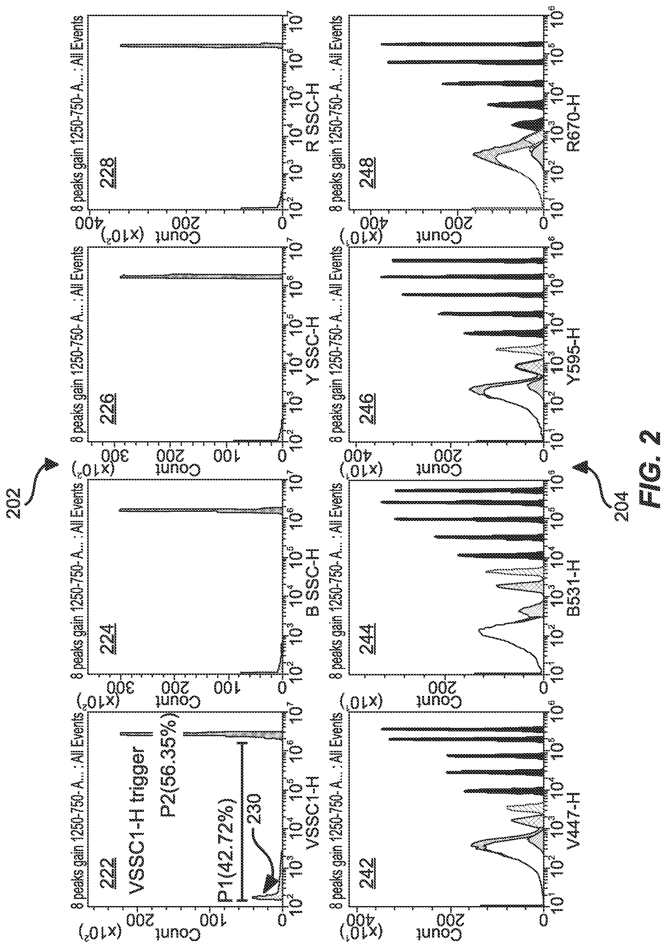

FIG. 2 is an example of peaks resolved on side scatter and fluorescent channels using 8-peak beads for fluorescence sensitivity monitoring. The top row depicts a series of side scatter detections 202 and the bottom row depicts a series of fluorescence detections 204. Graph 222 depicts violet side scatter, graph 224 depicts yellow side scatter, graph 226 depicts blue side scatter, and graph 228 depicts red side scatter. Graph 242 depicts a violet fluorescence channel at about 447 nm, graph 244 depicts a blue fluorescence channel at about 531 nm, graph 246 depicts a yellow fluorescence channel at about 595 nm, and graph 248 depicts a red fluorescence channel at about 670 nm. In the series of side scatter detections 202, a noise peak 230 is most visible in graph 222 depicting violet side scatter.

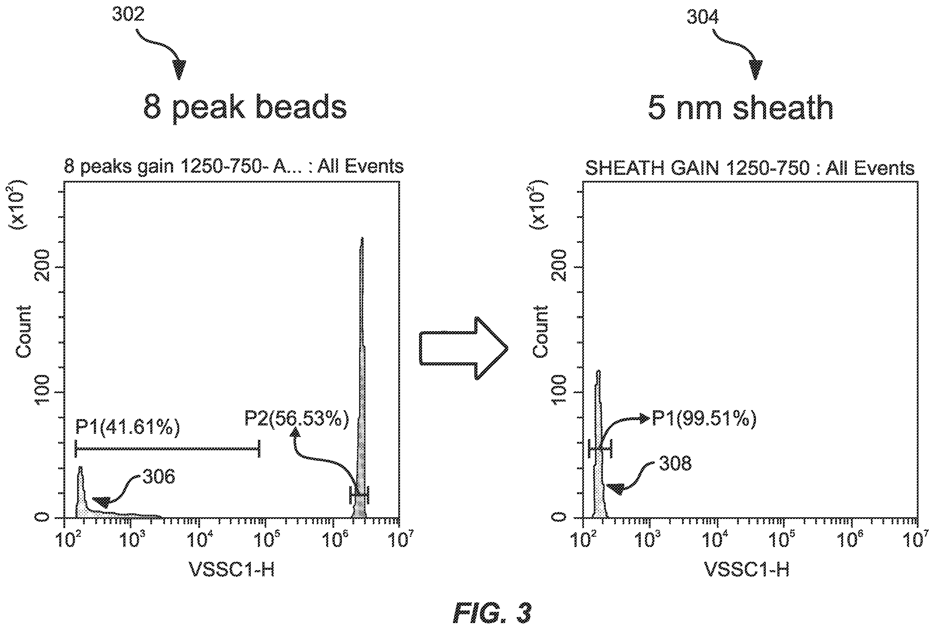

As is disclosed herein, high noise associated with the buffer conventionally used with the 8-peak beads obscures a true lower-limit of detection of the instrument. FIG. 3 depicts a comparison of the noise measurement of 8-peak bead buffer and sheath fluid on the violet side scatter channel. Graph 302 depicts a lower level noise measurement 306 on the conventional bead buffer, which can be seen to cover a wide range of values and resolve somewhat indeterminately. In contrast, graph 304 depicts a lower level noise measurement 308 on the sheath fluid, which can be seen to resolve as a tight and finite peak.

As this pattern is continually observable across repeated measurements, it becomes clear that the median of the sheath noise is lower than the median of the buffer noise. As is disclosed herein, such a reduction in median noise helps to increase the Fisher distance between the noise and a first resolvable peak in each of the channels. Fisher distance (FD) is defined based on the following equation: $Fisher Distance = \frac{{MFI}_{2} - {MFI}_{1}}{{δ}_{2} + {δ}_{1}}$

Where MFI₁ and MFI₂ are medians (or the mean fluorescence intensity) of two populations of noise measurement and δ₁ and δ₂ are standard deviations of these two populations. The FD is used to define the distance between the lower limit of detection as determined based on the noise measurement, and the first resolvable peak. As embodied in the disclosed systems and methods here, using sheath fluid for a noise determination, instead of the conventional practice of resolving noise from the buffer of the beads, Fisher distance values are increased with an associated improvement in instrument sensitivity.

While switching to using the sheath fluid as the basis for the threshold of the lower limit of detection is itself advantageous and produces a more accurate threshold of the lower level of detection, further advantages are achieved by defining a clear cut off between the negative population, e.g., the noise, and the positive population, e.g., the first resolvable peak from each channel. By more clearly defining this cut off, the threshold can be set with greater precision and values above the threshold that can be detected more accurately assigned.

By using a fluorescence channel to measure the noise, instead of the conventional practice of triggering on based on the side scatter detection, more control is provided in setting the threshold value. As compared with the broad spread of noise seen in the side scatter, fluorescence detection can be configured so that the noise from the sheath fluid appears as a precise peak, or knife edge, which can be used as the lower limit cutoff.

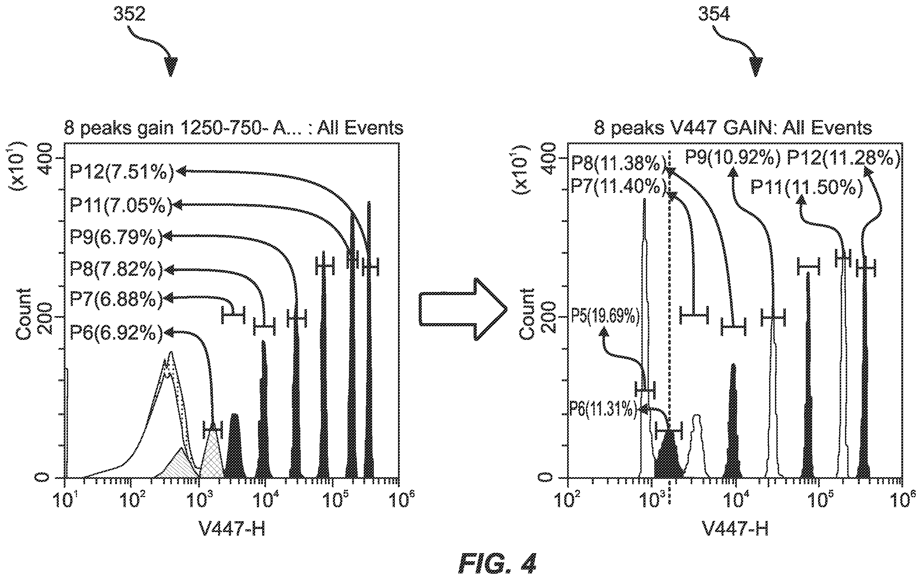

FIG. 4 depicts a comparison of the resolution of 8-peak beads as triggered on each of a side scatter channel and a fluorescence channel. Graph 352 shows peaks as resolved when triggered on a side scatter channel and graph 354 shows peaks as resolved when triggered on a fluorescence channel. As can be seen in this example, peaks in the graph 354 demonstrate cleaner resolution at lower values, where noise from the sheath and/or buffer would be expected to appear, than the peaks in the graph 352.

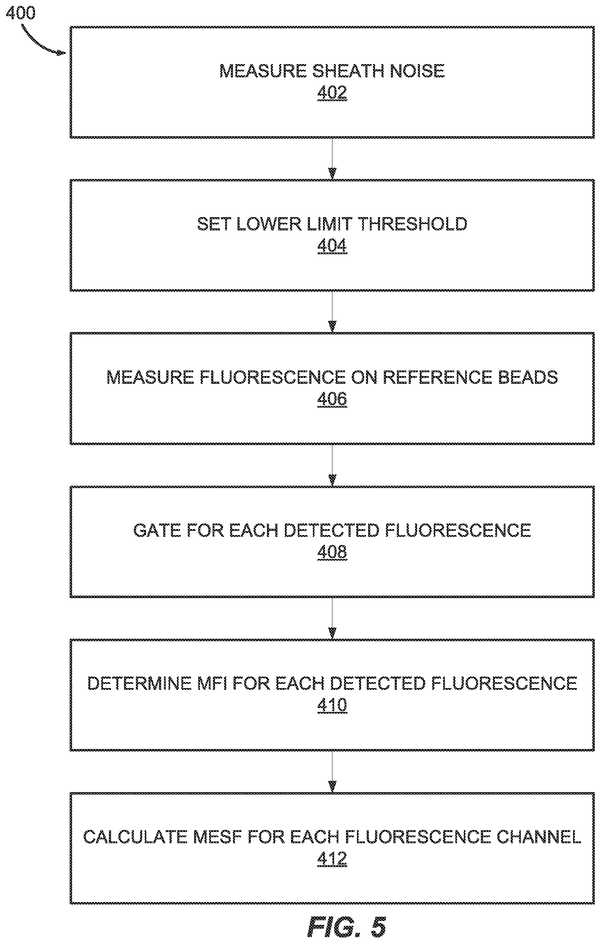

FIG. 5 is a flowchart of an example method 400 of fluorescence sensitivity monitoring in a flow cytometer. In embodiments, method 400 is executed by a controller or computing device associated with the flow cytometer, such as computing device 130 of FIG. 1. In embodiments, method 400 is executed by an independent device which receives processed waveform data from the flow cytometer or a downstream data processing system.

At operation 402, fluorescence of a sheath fluid is measured to determine a sheath noise. The method may further include filtering the sheath fluid. Filtering the sheath fluid may be performed integrally with the flow cytometer and may represent the routine treatment of the sheath fluid within the system. Filter the sheath fluid may further lower the generated noise by reducing noise generating debris present in the fluid. In embodiments, the sheath fluid is a 5 nm sheath fluid. In some embodiments, the 5 nm sheath fluid is a sheath fluid that has been filtered to remove impurities greater than 5 nm in size. In some cases, the MFI of the sheath fluid is used as the sheath noise.

At operation 404, a threshold detection value is set using the sheath noise. Setting a threshold for a lower limit of detection is used to distinguish between true sample signals and background noise, particularly for events with low fluorescence or abundance. By systematically evaluating background noise, employing negative controls, calculating signal-to-noise ratios, and validating with known samples, researchers can establish a reliable lower limit of detection in flow cytometry. This helps ensure accurate interpretation of experimental results. The threshold detection value may be set automatically by the system in response to the sheath noise measurement, or may be approved or set by user input.

At operation 406, fluorescence of a plurality of samples having predetermined fluorescence intensities at different wavelengths is measured, using the threshold detection value. In embodiments, the plurality of samples having predetermined fluorescence intensities at different wavelengths comprise a plurality of hard dyed beads. The plurality of hard dyed beads may be 8-peak beads.

At operation 408, each sample of the plurality of samples having predetermined fluorescence intensities at different wavelengths is gated. Gating fluorescence signals is a process used to ensure the accuracy and reliability of data of the fluorescence sensitivity data by using the reference beads or particles with predetermined fluorescence intensities to establish a baseline and monitor the sensitivity of the flow cytometer. In some examples, negative controls, or samples lacking the markers of interest, are included to help identify background noise and set thresholds for distinguishing true signals. Information over a range of fluorescence intensities to cover the expected dynamic range and gates are set on scatter plots or histograms to isolate the populations of interest. Gates may be adjusted to exclude background noise while capturing relevant fluorescence signals.

At operation 410, a mean fluorescence intensity (MFI) is identified, using the gating, for each sample of the plurality of samples having predetermined fluorescence intensities at different wavelengths. In embodiments, the MFI is determined as a peak intensity associated with the sample. In some cases, determining the MFI includes determining a median and a standard deviation for each peak.

In flow cytometry, MFI is a metric used for quantifying an average fluorescence intensity within a population of beads, cells, or particles that have been labeled with fluorescent markers. This technique enables the analysis of individual entities within a sample or group having multiple fluorescent signals. Data analysis software may be used to calculate MFI by determining the average fluorescence intensity of events within a defined gate.

The MFI calculation involves summing up the fluorescence intensity values for all events within the gate and then dividing this sum by the number of events. This results in a representative value that indicates the central tendency of fluorescence within the selected population. Higher MFI values typically suggest increased expression of the targeted marker on cell surfaces or within cells. MFI is a useful parameter to compare different samples or conditions within a single experiment, recognizing that absolute values may vary between experiments and instruments.

At operation 412, one or more fluorescence channels of the flow cytometer are calibrated by calculating, for each sample of the plurality of samples having predetermined fluorescence intensities at different wavelengths, molecules of equivalent soluble fluorochrome (MESF) using the MFI and the sheath noise.

Calculating the MESF raises a new challenge with the reduced lower limit of detection, as many fluorophore relevant calibrators do not go down to the level of several fluorescence molecules. In order to determine a sufficiently precise equation for calculating MESF, color reader beads are used to determine a number of fluorophores to associated with measured MFI values.

In an example, beads with a range of known number of capture sites, such as antibody capture sites, are used to determine the equations based on a known fluorophore/protein ratio. As each bead is associated with a known number of fluorophores, based on the number of capture sites and the number of fluorophores per protein, measured MFI associated with the color reader beads can be used to generate a plot a calibration curve of MESF to MFI for each fluorescence channel. Using the plot, a slope and intercept can be determined for each fluorochrome, and used to define an associated calibration equation. In embodiments, plotting is not performed and the equation is defined based on a mathematical relationship determined using the MFI and to the known number of fluorophores. Once defined, the equation for each fluorochrome or for each fluorescence channel is used to calculate an MESF for each measured MFI during the fluorescence sensitivity monitoring (sheath noise and reference beads).

In embodiments, each calibration curve is defined for the actual fluorochromes and, by extending the calibration curve, MESF values are assigned to each peak of, for example, 8 peak beads and the sheath noise. MESF assigned values for the sheath noise is used as a cut off above which the instrument is sensitive enough to detect usable sample values. These values may vary depending on calibrators used. In embodiments, calibration curves are predetermined and may be associated with the instrument, such as through metadata or by being stored in a non-transitory memory of a controller or computing device associated with the instrument.

While the example method 400 presents an overall method of fluorescence sensitivity monitoring, in embodiments fluorescence sensitivity monitoring may be divided into sub-methods which may be performed independently to monitor or adjust instrument operations. For example, establishing the lower of detection and calibrating the fluorescence channels may be performed separately.

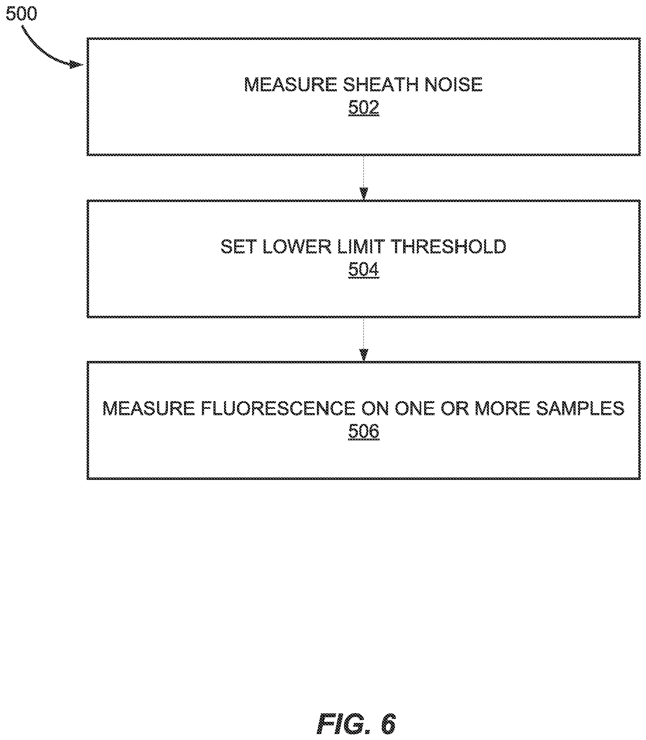

FIG. 6 is a flowchart of an example method 500 for determining a lower limit of detection on a flow cytometer. In embodiments, method 500 is executed by a controller or computing device associated with the flow cytometer, such as computing device 130 of FIG. 1. In embodiments, method 500 is executed by an independent device which receives processed waveform data from the flow cytometer or a downstream data processing system.

At operation 502, fluorescence on a sheath fluid is measured to determine a sheath noise. The method may further include filtering the sheath fluid. Filtering the sheath fluid may be performed integrally with the flow cytometer and may represent the routine treatment of the sheath fluid within the system. Filter the sheath fluid may further lower the generated noise by reducing noise generating debris present in the fluid. In embodiments, the sheath fluid is a 5 nm sheath fluid. In some cases, the MFI of the sheath fluid is used as the sheath noise.

At operation 504, a threshold detection value is set using the sheath noise. Setting a threshold for a lower limit of detection is used to distinguish between true sample signals and background noise, particularly for events with low fluorescence or abundance. The threshold detection value may be set automatically by the system in response to the sheath noise measurement, or may be approved or set by user input.

At operation 506, fluorescence of a plurality of fluorescent samples is measured using the threshold value. In embodiments, the plurality of samples having predetermined fluorescence intensities at different wavelengths comprise a plurality of hard dyed beads. The plurality of hard dyed beads may be 8-peak beads.

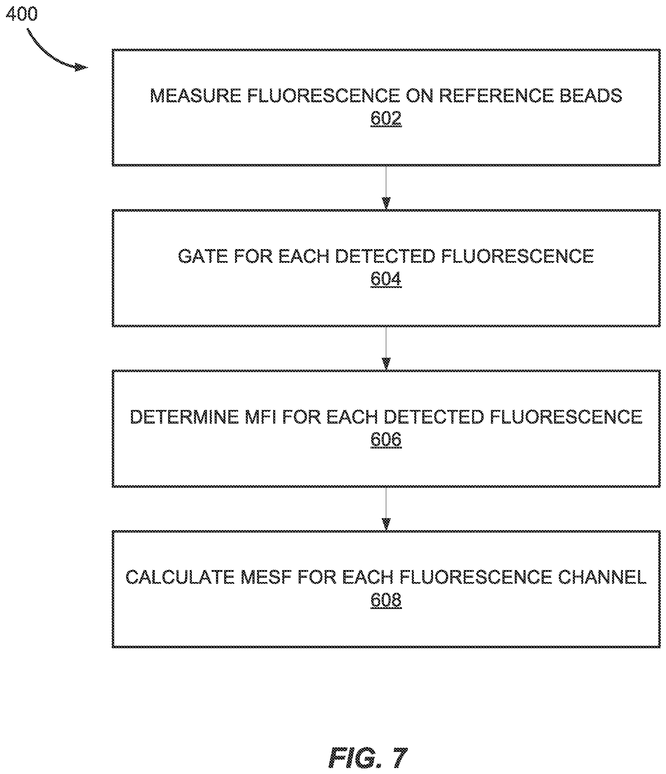

FIG. 7 is a flowchart of an example method 600 for calibrating one or more fluorescence channels of a flow cytometer. In embodiments, method 600 is executed by a controller or computing device associated with the flow cytometer, such as computing device 130 of FIG. 1. In embodiments, method 600 is executed by an independent device which receives processed waveform data from the flow cytometer or a downstream data processing system.

At operation 602, fluorescence of a plurality of samples, having predetermined fluorescence intensities at different wavelengths, is measured, using a predetermined detection threshold value. In embodiments, the predetermined detection threshold value may be determined using a method such as method 500 of FIG. 6. In embodiments, the plurality of samples having predetermined fluorescence intensities at different wavelengths comprise a plurality of hard dyed beads. The plurality of hard dyed beads may be 8-peak beads.

At operation 604, each sample of the plurality of samples having predetermined fluorescence intensities at different wavelengths is gated. Gating fluorescence signals is a process used to ensure the accuracy and reliability of data of the fluorescence sensitivity data by using the reference beads or particles with predetermined fluorescence intensities to establish a baseline and monitor the sensitivity of the flow cytometer. Information over a range of fluorescence intensities to cover the expected dynamic range and gates are set on scatter plots or histograms to isolate the populations of interest.

At operation 606, an MFI is identified for each sample of the plurality of samples having predetermined fluorescence intensities at different wavelengths. In embodiments, the MFI is determined as a peak intensity associated with the sample. In some cases, determining the MFI includes determining a median and a standard deviation for each peak. MFI is a measure quantifying an average fluorescence intensity within a population of beads, cells, or particles that have been labeled with fluorescent markers. This technique enables the analysis of individual entities within a sample or group having multiple fluorescent signals. Data analysis software may be used to calculate MFI by determining the average fluorescence intensity of events within a defined gate.

At operation 608, one or more fluorescence channels of the flow cytometer are calibrated by calculating, for each sample of the plurality of samples of predetermined fluorescent intensity or condition, an MESF using the MFI and the predetermined detection threshold.

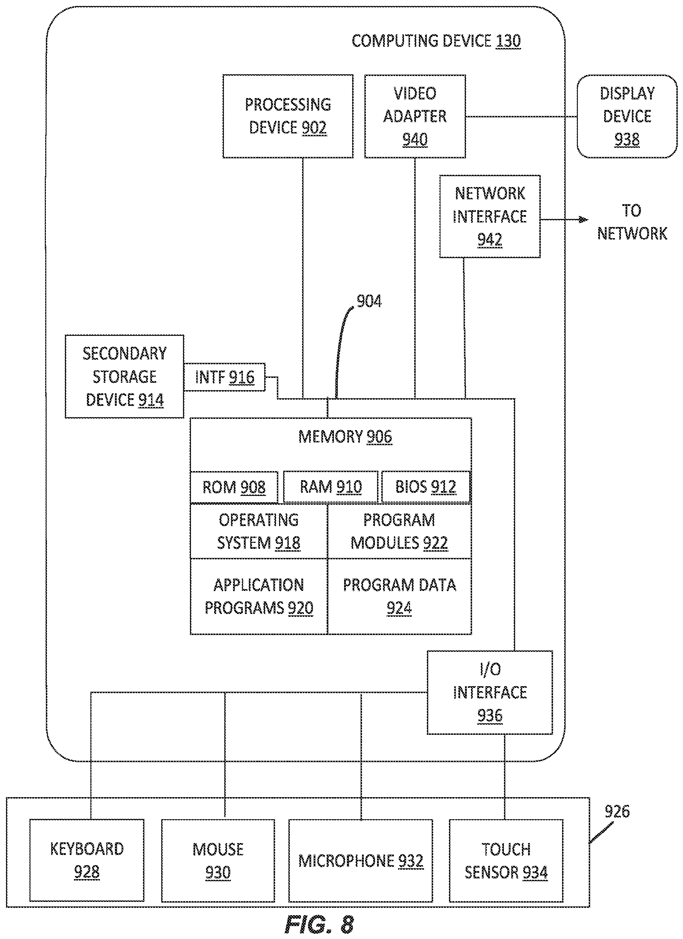

FIG. 8 illustrates an exemplary architecture of a computing device that can be used to implement aspects of the present disclosure, including the computing device 300. The computing device illustrated in FIG. 8 can be used to execute the operating system, application programs, and software modules (including the software engines) described herein.

The computing device 130 includes, in some embodiments, at least one processing device 902, such as a central processing unit (CPU). A variety of processing devices are available from a variety of manufacturers, for example, Intel or Advanced Micro Devices. In this example, the computing device 130 also includes a system memory 906, and a system bus 904 that couples various system components including the system memory 906 to the processing device 902. The system bus 904 is one of any number of types of bus structures including a memory bus, or memory controller; a peripheral bus; and a local bus using any of a variety of bus architectures.

Examples of computing devices suitable for the computing device 130 include a server computer, a desktop computer, a laptop computer, a tablet computer, a mobile computing device (such as a smart phone, an iPod^{®} or iPad^{®} mobile digital device, or other mobile devices), or other devices configured to process digital instructions.

The system memory 906 includes read only memory 908 and random access memory (RAM) 910. A basic input/output system 912 containing the basic routines that act to transfer information within computing device 130, such as during start up, is typically stored in the read only memory 908. In some embodiments the waveform analysis device 150 (FIG. 1) has a large memory capacity, such as equal to or greater than one Terabyte of RAM. The RAM can be used by the GPU 152 for loading and subsequently analyzing the waveform data (e.g., the raw waveform data, such as stored in a raw waveform data file, which can include digitalized waveform data).

The computing device 130 also includes a secondary storage device 914 in some embodiments, such as a hard disk drive, for storing digital data. The secondary storage device 914 is connected to the system bus 904 by a secondary storage interface 916. The secondary storage devices 914 and their associated computer readable media provide nonvolatile storage of computer readable instructions (including application programs and program modules), data structures, and other data for the computing device 130.

Although the exemplary environment described herein employs a hard disk drive as a secondary storage device, other types of computer readable storage media are used in other embodiments. Examples of these other types of computer readable storage media include magnetic cassettes, flash memory cards, digital video disks, Bernoulli cartridges, compact disc read only memories, digital versatile disk read only memories, random access memories, or read only memories. Some embodiments include non-transitory media. Additionally, such computer readable storage media can include local storage or cloud-based storage.

A number of program modules can be stored in secondary storage device 914 or memory 906, including an operating system 918, one or more application programs 920, other program modules 922 (such as the software engines described herein), and program data 924. The computing device 130 can utilize any suitable operating system, such as Microsoft Windows^{™}, Google Chrome^{™}, Apple OS, and any other operating system suitable for a computing device.

In some embodiments, a user provides inputs to the computing device 130 through one or more input devices 926. Examples of input devices 926 include a keyboard 928, mouse 930, microphone 932, and touch sensor 934 (such as a touchpad or touch sensitive display). Other embodiments include other input devices 926. The input devices 926 are often connected to the processing device 902 through an input/output interface 936 that is coupled to the system bus 904. These input devices 926 can be connected by any number of input/output interfaces, such as a parallel port, serial port, game port, or a universal serial bus. Wireless communication between input devices and the interface 936 is possible as well, and includes infrared, BLUETOOTH^{®} wireless technology, 802.11a/b/g/n, cellular, or other radio frequency communication systems in some possible embodiments.

In this example embodiment, a display device 938, such as a monitor, liquid crystal display device, projector, or touch sensitive display device, is also connected to the system bus 904 via an interface, such as a video adapter 940. In addition to the display device 938, the computing device 130 can include various other peripheral devices (not shown), such as speakers or a printer.

When used in a local area networking environment or a wide area networking environment (such as the Internet), the computing device 130 is typically connected to a network through a network interface 942, such as an Ethernet interface. Other possible embodiments use other communication devices. For example, some embodiments of the computing device 130 include a modem for communicating across the network.

The computing device 130 typically includes at least some form of computer readable media. Computer readable media includes any available media that can be accessed by the computing device 130. By way of example, computer readable media include computer readable storage media and computer readable communication media.

Computer readable storage media includes volatile and nonvolatile, removable and non-removable media implemented in any device configured to store information such as computer readable instructions, data structures, program modules or other data. Computer readable storage media includes, but is not limited to, random access memory, read only memory, electrically erasable programmable read only memory, flash memory or other memory technology, compact disc read only memory, digital versatile disks or other optical storage, magnetic cassettes, magnetic tape, magnetic disk storage or other magnetic storage devices, or any other medium that can be used to store the desired information and that can be accessed by the computing device 130. Computer readable storage media does not include computer readable communication media.

Computer readable communication media typically embodies computer readable instructions, data structures, program modules or other data in a modulated data signal such as a carrier wave or other transport mechanism and includes any information delivery media. The term "modulated data signal" refers to a signal that has one or more of its characteristics set or changed in such a manner as to encode information in the signal. By way of example, computer readable communication media includes wired media such as a wired network or direct-wired connection, and wireless media such as acoustic, radio frequency, infrared, and other wireless media. Combinations of any of the above are also included within the scope of computer readable media.

The computing device illustrated in FIG. 8 is also an example of programmable electronics, which may include one or more such computing devices, and when multiple computing devices are included, such computing devices can be coupled together with a suitable data communication network so as to collectively perform the various functions, methods, or operations disclosed herein.

## Claims

1. A method of fluorescence sensitivity monitoring in a flow cytometer, the method comprising:
measuring (402) fluorescence of a sheath fluid to determine a sheath noise;
setting (404) a threshold detection value using the sheath noise;
measuring (406) fluorescence of a plurality of samples having predetermined fluorescence intensities at different wavelengths, using the threshold detection value;
gating (408) for each sample of the plurality of samples having predetermined fluorescence intensities at different wavelengths;
identifying (410), using the gating, for each sample of the plurality of samples having predetermined fluorescence intensities at different wavelengths, a mean fluorescence intensity (MFI); and
calibrating (412) one or more fluorescence channels of the flow cytometer by calculating, for each sample of the plurality of samples having predetermined fluorescence intensities at different wavelengths, molecules of equivalent soluble fluorochrome (MESF) using the MFI and the sheath noise.

2. The method of claim 1, further comprising filtering the sheath fluid.

3. The method of claim 2, wherein the sheath fluid is a 5 nm sheath fluid.

4. The method of any one of claims 1-3, wherein the sheath noise is the MFI of the sheath fluid.

5. The method of any one of claims 1-4, wherein the plurality of samples having predetermined fluorescence intensities at different wavelengths comprise a plurality of hard dyed beads.

6. The method of any one of claims 1-5, wherein calculating MESF uses a calibration equation determined by:
measuring fluorescence of a plurality of color reader beads with each color reader bead being associated with a known amount of a fluorophore;
defining MFI for each plurality of color reader beads per each fluorescence channel; and
defining the calibration equation for each fluorescence channel using a relationship between the MFI and the known amount of the fluorophore.

7. The method of any one of claims 1-6, wherein identifying, for each sample of the plurality of samples having predetermined fluorescence intensities at different wavelengths, the MFI, includes determining, for each sample of the plurality of samples having predetermined fluorescence intensities at different wavelengths, a peak intensity associated with the sample.

8. The method of claim 7, further comprising determining a median and a standard deviation for each peak.

9. A system (100) for fluorescence sensitivity monitoring in a flow cytometer (101), the system comprising:
a laser (102) configured to emit light toward an interrogation location (116) to produce fluorescent light signals from particles directed through the interrogation location in a fluid stream;
a fluorescence detector (FL1, FL2, FL3) configured to detect the fluorescent light signals from particles directed through the interrogation location;
a controller (130) in communication with the fluorescence detector and including at least one processor and a non-transitory memory storing instructions which, when executed by the controller, cause the controller to:
measure, with the fluorescence detector, fluorescence of a sheath fluid to determine a sheath noise;
set a threshold detection value using the sheath noise;
measure, with the fluorescence detector, fluorescence of a plurality of samples having predetermined fluorescence intensities at different wavelengths, using the threshold detection value;
gate for each sample of the plurality of samples having predetermined fluorescence intensities at different wavelengths;
identify, for each sample of the plurality of samples having predetermined fluorescence intensities at different wavelengths, a mean fluorescence intensity (MFI); and
calibrate one or more fluorescence channels of the flow cytometer by calculating, for each sample of the plurality of samples of predetermined fluorescent intensity or condition, molecules of equivalent soluble fluorochrome (MESF) using the MFI and the sheath noise.

10. The system of claim 9, further comprising a filter for filtering the sheath fluid.

11. The system of claim 10, wherein the sheath fluid is a 5 nm sheath fluid.

12. The system of any one of claims 9-11, wherein the sheath noise is the MFI of the sheath fluid.

13. The system of any one of claims 9-12, wherein the plurality of samples having predetermined fluorescence intensities at different wavelengths comprise a plurality of hard dyed beads.

14. The system of any one of claims 9-13, wherein the instructions for calculating MESF uses a calibration equation determined by the controller executing further instructions stored on the non-transitory memory which cause the controller to:
measure fluorescence of a plurality of color reader beads with each color reader bead being associated with a known amount of a fluorophore;
define MFI for each plurality of color reader beads per each fluorescence channel; and
define the calibration equation for each fluorescence channel using a relationship between the MFI and the known amount of the fluorophore.

15. The system of any one of claims 9-14, wherein the instructions for identifying, for each sample of the plurality of samples having predetermined fluorescence intensities at different wavelengths, the MFI, include further instructions stored on the non-transitory memory which cause the controller to determine, for each sample of the plurality of samples having predetermined fluorescence intensities at different wavelengths:
a peak intensity associated with the sample; and
a median and a standard deviation for each peak.

## Patentansprüche

1. Verfahren zur Fluoreszenzempfindlichkeitsüberwachung in einem Durchflusszytometer, wobei das Verfahren umfasst:
Messen (402) von Fluoreszenz eines Hüllfluids, um ein Rauschen des Hüllfluids zu bestimmen;
Setzen (404) eines Schwellwert-Detektionswerts unter Verwendung des Rauschens des Hüllfluids;
Messen (406) von Fluoreszenz einer Vielzahl von Proben, die vorbestimmte Fluoreszenzintensitäten bei verschiedenen Wellenlängen aufweisen, unter Verwendung des Schwellwert-Detektionswerts;
Durchführen eines Gatings (408) für jede Probe der Vielzahl von Proben, die vorbestimmte Fluoreszenzintensitäten bei verschiedenen Wellenlängen aufweisen;
Identifizieren (410), unter Verwendung des Gatings für jede Probe der Vielzahl von Proben, die vorbestimmte Fluoreszenzintensitäten bei verschiedenen Wellenlängen aufweisen, einer mittleren Fluoreszenzintensität (MFI); und
Kalibrieren (412) eines oder mehrerer Fluoreszenzkanäle des Durchflusszytometers durch Berechnen von Molekülen eines äquivalenten löslichen Fluorochroms (MESF) für jede Probe der Vielzahl von Proben, die vorbestimmte Fluoreszenzintensitäten bei verschiedenen Wellenlängen aufweisen, unter Verwendung der MFI und des Rauschens des Hüllfluids.

2. Verfahren nach Anspruch 1, weiter umfassend das Filtern des Hüllfluids.

3. Verfahren nach Anspruch 2, wobei das Hüllfluid ein 5-nm-Hüllfluid ist.

4. Verfahren nach einem der Ansprüche 1-3, wobei das Rauschen des Hüllfluids die MFI des Hüllfluids ist.

5. Verfahren nach einem der Ansprüche 1-4, wobei die Vielzahl von Proben, die vorbestimmte Fluoreszenzintensitäten bei verschiedenen Wellenlängen aufweisen, eine Vielzahl von durchgefärbten Kügelchen umfasst.

6. Verfahren nach einem der Ansprüche 1-5, wobei das Berechnen von MESF eine Kalibrierungsgleichung verwendet, die bestimmt wird durch:
Messen von Fluoreszenz einer Vielzahl von Farblesekügelchen, wobei jedes Farblesekügelchen mit einer bekannten Menge eines Fluorophors assoziiert ist;
Definieren von MFI für jede Vielzahl von Farblesekügelchen pro jedem Fluoreszenzkanal; und
Definieren der Kalibrierungsgleichung für jeden Fluoreszenzkanal unter Verwendung einer Beziehung zwischen der MFI und der bekannten Menge des Fluorophors.

7. Verfahren nach einem der Ansprüche 1-6, wobei das Identifizieren der MFI für jede Probe der Vielzahl von Proben, die vorbestimmte Fluoreszenzintensitäten bei verschiedenen Wellenlängen aufweisen, das Bestimmen einer Spitzenintensität, die mit der Probe assoziiert ist, für jede Probe der Vielzahl von Proben, die vorbestimmte Fluoreszenzintensitäten bei verschiedenen Wellenlängen aufweisen, einschließt.

8. Verfahren nach Anspruch 7, weiter umfassend das Bestimmen eines Medians und einer Standardabweichung für jede Spitze.

9. System (100) zur Fluoreszenzempfindlichkeitsüberwachung in einem Durchflusszytometer (101),
wobei das System Folgendes umfasst:
einen Laser (102), der konfiguriert ist, Licht zu einer Abfragestelle (116) auszusenden, um fluoreszierende Lichtsignale von Teilchen zu erzeugen, die durch die Abfragestelle in einem Fluidstrom geleitet werden;
einen Fluoreszenzdetektor (FL1, FL2, FL3), der konfiguriert ist, die fluoreszierenden Lichtsignale von Teilchen zu detektieren, die durch die Abfragestelle geleitet werden;
eine Steuereinheit (130), die mit dem Fluoreszenzdetektor in Verbindung steht und mindestens einen Prozessor und einen nichtflüchtigen Speicher einschließt, der Anweisungen speichert, die, wenn sie von der Steuereinheit ausgeführt werden, die Steuereinheit veranlassen:
mit dem Fluoreszenzdetektor Fluoreszenz eines Hüllfluids zu messen, um ein Rauschen des Hüllfluids zu bestimmen;
einen Schwellwert-Detektionswert unter Verwendung des Rauschens des Hüllfluids zu setzen;
mit dem Fluoreszenzdetektor Fluoreszenz einer Vielzahl von Proben, die vorbestimmte Fluoreszenzintensitäten bei verschiedenen Wellenlängen aufweisen, unter Verwendung des Schwellwert-Detektionswerts zu messen;
für jede Probe der Vielzahl von Proben, die vorbestimmte Fluoreszenzintensitäten bei verschiedenen Wellenlängen aufweisen, ein Gating durchzuführen;
für jede Probe der Vielzahl von Proben, die vorbestimmte Fluoreszenzintensitäten bei verschiedenen Wellenlängen aufweisen, eine mittlere Fluoreszenzintensität (MFI) zu identifizieren; und
einen oder mehrere Fluoreszenzkanäle des Durchflusszytometers zu kalibrieren, indem für jede Probe der Vielzahl von Proben mit vorbestimmter fluoreszierender Intensität oder Bedingung Moleküle eines äquivalenten löslichen Fluorochroms (MESF) unter Verwendung der MFI und des Rauschens des Hüllfluids berechnet werden.

10. System nach Anspruch 9, weiter umfassend einen Filter zum Filtern des Hüllfluids.

11. System nach Anspruch 10, wobei das Hüllfluid ein 5-nm-Hüllfluid ist.

12. System nach einem der Ansprüche 9-11, wobei das Rauschen des Hüllfluids die MFI des Hüllfluids ist.

13. System nach einem der Ansprüche 9-12, wobei die Vielzahl von Proben, die vorbestimmte Fluoreszenzintensitäten bei verschiedenen Wellenlängen aufweisen, eine Vielzahl von durchgefärbten Kügelchen umfasst.

14. System nach einem der Ansprüche 9-13, wobei die Anweisungen zum Berechnen von MESF eine Kalibrierungsgleichung verwenden, die dadurch bestimmt wird, dass die Steuereinheit weitere im nichtflüchtigen Speicher gespeicherte Anweisungen ausführt, die die Steuereinheit veranlassen:
Fluoreszenz einer Vielzahl von Farblesekügelchen zu messen, wobei jedes Farblesekügelchen mit einer bekannten Menge eines Fluorophors assoziiert ist;
MFI für jede Vielzahl von Farblesekügelchen pro jedem Fluoreszenzkanal zu definieren; und
die Kalibrierungsgleichung für jeden Fluoreszenzkanal unter Verwendung einer Beziehung zwischen der MFI und der bekannten Menge des Fluorophors zu definieren.

15. System nach einem der Ansprüche 9-14, wobei die Anweisungen zum Identifizieren der MFI für jede Probe der Vielzahl von Proben, die vorbestimmte Fluoreszenzintensitäten bei verschiedenen Wellenlängen aufweisen, weitere im nichtflüchtigen Speicher gespeicherte Anweisungen einschließen, die die Steuereinheit veranlassen, für jede Probe der Vielzahl von Proben, die vorbestimmte Fluoreszenzintensitäten bei verschiedenen Wellenlängen aufweisen, zu bestimmen:
eine Spitzenintensität, die mit der Probe assoziiert ist; und
einen Median und eine Standardabweichung für jede Spitze.

## Revendications

1. Procédé de surveillance de sensibilité à la fluorescence dans un cytomètre en flux, le procédé comprenant :
le fait de mesurer (402) une fluorescence d'un fluide de gaine pour déterminer un bruit de gaine ;
le fait de régler (404) une valeur de détection seuil en utilisant le bruit de gaine ;
le fait de mesurer (406) une fluorescence d'une pluralité d'échantillons présentant des intensités de fluorescence prédéterminées à différentes longueurs d'onde, en utilisant la valeur de détection seuil ;
le fait d'effectuer un fenêtrage (408) pour chaque échantillon de la pluralité d'échantillons présentant des intensités de fluorescence prédéterminées à différentes longueurs d'onde ;
le fait d'identifier (410), en utilisant le fenêtrage, pour chaque échantillon de la pluralité d'échantillons présentant des intensités de fluorescence prédéterminées à différentes longueurs d'onde, une intensité de fluorescence moyenne (MFI) ; et
le fait d'étalonner (412) un ou plusieurs canaux de fluorescence du cytomètre en flux en calculant, pour chaque échantillon de la pluralité d'échantillons présentant des intensités de fluorescence prédéterminées à différentes longueurs d'onde, des molécules de fluorochrome soluble équivalent (MESF) en utilisant la MFI et le bruit de gaine.

2. Procédé selon la revendication 1, comprenant en outre la filtration du fluide de gaine.

3. Procédé selon la revendication 2, dans lequel le fluide de gaine est un fluide de gaine de 5 nm.

4. Procédé selon l'une quelconque des revendications 1 à 3, dans lequel le bruit de gaine est la MFI du fluide de gaine.

5. Procédé selon l'une quelconque des revendications 1 à 4, dans lequel la pluralité d'échantillons présentant des intensités de fluorescence prédéterminées à différentes longueurs d'onde comprennent une pluralité de billes teintées rigides.

6. Procédé selon l'une quelconque des revendications 1 à 5, dans lequel le calcul des MESF utilise une équation d'étalonnage déterminée par :
la mesure d'une fluorescence d'une pluralité de billes colorées de lecture, chaque bille colorée de lecture étant associée à une quantité connue d'un fluorophore ;
la définition d'une MFI pour chaque pluralité de billes colorées de lecture par canal de fluorescence ; et
la définition de l'équation d'étalonnage pour chaque canal de fluorescence en utilisant une relation entre la MFI et la quantité connue du fluorophore.

7. Procédé selon l'une quelconque des revendications 1 à 6, dans lequel l'identification, pour chaque échantillon de la pluralité d'échantillons présentant des intensités de fluorescence prédéterminées à différentes longueurs d'onde, de la MFI, inclut la détermination, pour chaque échantillon de la pluralité d'échantillons présentant des intensités de fluorescence prédéterminées à différentes longueurs d'onde, d'une intensité de pic associée à l'échantillon.

8. Procédé selon la revendication 7, comprenant en outre la détermination d'une médiane et d'un écart-type pour chaque pic.

9. Système (100) de surveillance de sensibilité à la fluorescence dans un cytomètre en flux (101), le système comprenant :
un laser (102) configuré pour émettre une lumière vers un site d'interrogation (116) afin de produire des signaux lumineux fluorescents à partir de particules dirigées à travers le site d'interrogation dans un flux de fluide ;
un détecteur de fluorescence (FL1, FL2, FL3) configuré pour détecter les signaux lumineux fluorescents provenant de particules dirigées à travers le site d'interrogation ;
un dispositif de commande (130) en communication avec le détecteur de fluorescence et incluant au moins un processeur et une mémoire non transitoire stockant des instructions qui, lorsqu'elles sont exécutées par le dispositif de commande, amènent le dispositif de commande à :
mesurer, avec le détecteur de fluorescence, une fluorescence d'un fluide de gaine pour déterminer un bruit de gaine ;
régler une valeur de détection seuil en utilisant le bruit de gaine ;
mesurer, avec le détecteur de fluorescence, une fluorescence d'une pluralité d'échantillons présentant des intensités de fluorescence prédéterminées à différentes longueurs d'onde, en utilisant la valeur de détection seuil ;
effectuer un fenêtrage pour chaque échantillon de la pluralité d'échantillons présentant des intensités de fluorescence prédéterminées à différentes longueurs d'onde ;
identifier, pour chaque échantillon de la pluralité d'échantillons présentant des intensités de fluorescence prédéterminées à différentes longueurs d'onde, une intensité de fluorescence moyenne (MFI) ; et
étalonner un ou plusieurs canaux de fluorescence du cytomètre en flux en calculant, pour chaque échantillon de la pluralité d'échantillons présentant une intensité ou condition de fluorescence prédéterminée, des molécules de fluorochrome soluble équivalent (MESF) en utilisant la MFI et le bruit de gaine.

10. Système selon la revendication 9, comprenant en outre un filtre destiné à filtrer le fluide de gaine.

11. Système selon la revendication 10, dans lequel le fluide de gaine est un fluide de gaine de 5 nm.

12. Système selon l'une quelconque des revendications 9 à 11, dans lequel le bruit de gaine est la MFI du fluide de gaine.

13. Système selon l'une quelconque des revendications 9 à 12, dans lequel la pluralité d'échantillons présentant des intensités de fluorescence prédéterminées à différentes longueurs d'onde comprennent une pluralité de billes teintées rigides.

14. Système selon l'une quelconque des revendications 9 à 13, dans lequel les instructions pour calculer les MESF utilisent une équation d'étalonnage déterminée par le dispositif de commande exécutant des instructions supplémentaires stockées dans la mémoire non transitoire qui amènent le dispositif de commande à :
mesurer une fluorescence d'une pluralité de billes colorées de lecture, chaque bille colorée de lecture étant associée à une quantité connue d'un fluorophore ;
définir une MFI pour chaque pluralité de billes colorées de lecture par canal de fluorescence ; et
définir l'équation d'étalonnage pour chaque canal de fluorescence en utilisant une relation entre la MFI et la quantité connue du fluorophore.

15. Système selon l'une quelconque des revendications 9 à 14, dans lequel les instructions pour identifier, pour chaque échantillon de la pluralité d'échantillons présentant des intensités de fluorescence prédéterminées à différentes longueurs d'onde, la MFI, incluent des instructions supplémentaires stockées dans la mémoire non transitoire qui amènent le dispositif de commande à déterminer, pour chaque échantillon de la pluralité d'échantillons présentant des intensités de fluorescence prédéterminées à différentes longueurs d'onde :
une intensité de pic associée à l'échantillon ; et
une médiane et un écart-type pour chaque pic.
